(19) Europäisches Patentamt
European Patent Office
Office européen des brevets

(11) EP 4 772 419 A1

(12) EUROPEAN PATENT APPLICATION

(43) Date of publication:
08.07.2026 Bulletin 2026/28

(51) International Patent Classification (IPC):
B62D 11/00 $^{(2006.01)}$        B62D 11/04 $^{(2006.01)}$
B62D 11/24 $^{(2006.01)}$        B62D 49/00 $^{(2006.01)}$
B62D 53/12 $^{(2006.01)}$

(21) Application number: 25150392.6

(22) Date of filing: 07.01.2025

(52) Cooperative Patent Classification (CPC):
B62D 11/003; B62D 11/04; B62D 53/0864;
B62D 53/12; B62D 11/24

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Volvo Truck Corporation
405 08 Göteborg (SE)

(72) Inventors:
• LAINE, Leo
  GÖTEBORG (SE)
• SADEGHI KATI, Maliheh
  ÖJERSJÖ (SE)
• GELSO, Esteban
  VÄSTRA FRÖLUNDA (SE)
• GALITSKY, Gosha
  VÄSTRA FRÖLUNDA (SE)

(74) Representative: Ström & Gulliksson AB
P.O. Box 4188
203 13 Malmö (SE)

(54) MANOEUVRING A DOLLY VEHICLE

(57) A computer system (270, 280, 400) and computer-implemented method (300) are disclosed for manoeuvring a dolly vehicle (200) comprising a pivoted front wheel (210), a left rear wheel (230), and a right rear wheel (240). The computer-implemented method (300) comprises: acquiring (302), by processing circuitry (275, 285, 402) of a computer system (270, 280, 400), a desired steering angle for the pivoted front wheel (210); determining (304), by the processing circuitry (275, 285, 402), a steering moment (Mst) to provide the desired steering angle at the pivoted front wheel (210); and determining (306), by the processing circuitry (275, 285, 402), a drive torque (Tel2, Tel3) for one or more of the left rear wheel (230) and the right rear wheel (240) to provide the determined steering moment (Mst). This provides improved manoeuvrability of the dolly vehicle.

FIG. 2

**Description**

**TECHNICAL FIELD**

The disclosure relates generally to vehicle control. In particular aspects, the disclosure relates to manoeuvring a dolly vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

A semitrailer vehicle normally comprises a tractor unit arranged to tow a trailer unit via a fifth wheel connection. In order to extend the cargo transport ability of the semitrailer vehicle, a dolly vehicle can be added to the vehicle combination, which allows for additional trailer units to be towed by the same tractor unit. A traditional dolly vehicle is an unpowered vehicle unit designed for connection to a tractor unit, truck or prime mover vehicle with strong traction power.

Dolly vehicles comprising on-board power sources such as electrical machines and dolly vehicles with one or more steered axles have recently been proposed. Such dolly vehicles can provide additional power to the vehicle combination, thus reducing the traction power requirements imposed on the prime mover vehicle. Electrified dolly vehicles may also reduce overall fuel consumption by the vehicle combination, since they provide a degree of hybridization to conventional diesel-engine powered tractors.

However, dolly vehicles typically do not have steering on all axles, which can make it hard to control the steering angle of such axles. As such, the dolly vehicle becomes difficult to manoeuvre without using a pulling unit, which inherently limits the space in which such a dolly vehicle can be manoeuvred.

It is therefore desired to provide systems, methods and other approaches for manoeuvring a dolly vehicle that attempt to resolve or at least mitigate one or more of these issues.

**SUMMARY**

This disclosure provides systems, methods and other approaches for manoeuvring a three-wheeled dolly vehicle having a pivoted front wheel and left and right rear wheels, for example a drawbar trailed. A desired steering angle is acquired for the pivoted front wheel along with a corresponding steering moment. Positive (propulsion) and/or negative (braking, reverse) torques for the rear wheels are then determined in order to provide the steering moment required to implement the desired steering angle. In this way, the steering angle of the front wheel of the dolly vehicle can be controlled by applying positive or negative torque individually at the right and left sides of the rear wheels. As such, the dolly vehicle can be manoeuvred without a pulling unit or a steering column/wheel. This enables the dolly vehicle to be manoeuvred in smaller spaces and to be manoeuvred remotely and/or autonomously.

According to a first aspect of the disclosure, there is provided a computer system for manoeuvring a dolly vehicle comprising a pivoted front wheel, a left rear wheel, and a right rear wheel, the computer system comprising processing circuitry configured to: acquire a desired steering angle for the pivoted front wheel; determine a steering moment to provide the desired steering angle at the pivoted front wheel; and determine a drive torque for one or more of the left rear wheel and the right rear wheel to provide the determined steering moment.

The first aspect of the disclosure may seek to provide improved control of the steering angle of the front wheel of a dolly vehicle. By determining and applying torque individually at the right and left rear wheels, the dolly vehicle can be manoeuvred without a pulling unit or a steering column/wheel. This enables the dolly vehicle to be manoeuvred in smaller spaces and to be manoeuvred remotely and/or autonomously.

Optionally in some examples, including in at least one preferred example, the processing circuitry is configured to determine the steering moment based on the distance from the centre of gravity of the dolly vehicle to the position of the pivoted front wheel. A technical benefit may include that changes in the normal loads and grip margins for the three wheels of the dolly vehicle can be taken into account to provide more appropriate and accurate control of the steering angle.

Optionally in some examples, including in at least one preferred example, the processing circuitry is configured to adjust the distance from a kingpin of the dolly vehicle to the position of the pivoted front wheel to adjust the drive torque required for one or more of the left rear wheel and the right rear wheel to provide the determined steering moment. A technical benefit may include that normal loads and grip margins for the three wheels of the dolly vehicle, and therefore the steering moment, can be controlled as they are dependent on the kingpin position.

Optionally in some examples, including in at least one preferred example, the processing circuitry is configured to determine the steering moment based on the dimensions of the pivoted front wheel. A technical benefit may include that the effects of using wheels of different shapes and sizes can be taken into account to provide more appropriate and accurate control of the steering angle.

Optionally in some examples, including in at least one preferred example, the processing circuitry is configured to determine a drive torque for the pivoted front wheel. A technical benefit may include that improved control is provided for low-speed manoeuvring.

Optionally in some examples, including in at least one preferred example, the processing circuitry is configured to determine a drive torque for one or more of the left rear wheel, the right rear wheel, and the pivoted front wheel according to:

$$
\begin{bmatrix} F_x \\ F_y \\ M_z \\ M_{st} \end{bmatrix} = \begin{bmatrix} \dfrac{1}{R_1} & \dfrac{1}{R_2} & \dfrac{\cos\delta}{R_3} \\ 0 & 0 & \dfrac{\sin\delta}{R_3} \\ -\dfrac{w}{2R_1} & \dfrac{w}{2R_2} & \dfrac{\sin\delta}{R_3}\, l_f \\ 1 & -1 & 0 \end{bmatrix} \begin{bmatrix} T_{el2} \\ T_{el3} \\ T_{el1} \end{bmatrix}
$$

where $F_x$ is the longitudinal force on the dolly vehicle, $F_y$ is the lateral force on the dolly vehicle, $M_z$ is the yaw moment of the dolly vehicle, $M_{st}$ is the steering moment to provide the desired steering angle, $\delta$ is the desired steering angle, $R_1$ is the radius of the pivoted front wheel, $R_2$ is the radius of the pivoted left rear wheel, $R_3$ is the radius of the right rear wheel, $l_f$ is the distance from the centre of gravity of the dolly vehicle to the position of the front wheel, $T_{el1}$ is a drive torque for the pivoted front wheel, $T_{el2}$ is a drive torque for the left rear wheel, and $T_{el3}$ is a drive torque for the right rear wheel. A technical benefit may include that a robust mathematical approach is provided for controlling each wheel of the dolly vehicle to provide the desired steering angle.

Optionally in some examples, including in at least one preferred example, the drive torque comprises one or more of a positive torque and a negative torque. A technical benefit may include that a variety of different approaches can be applied to provide a determined steering moment that enable more precise manoeuvring e.g. in smaller spaces.

Optionally in some examples, including in at least one preferred example, the processing circuitry is configured to transmit the determined drive torque to a controller of the vehicle configured to control motion of one or more of the wheels. A technical benefit may include that the dolly vehicle can be manoeuvred without a pulling unit or a steering column/wheel. This enables the dolly vehicle to be manoeuvred in smaller spaces and to be manoeuvred remotely and/or autonomously.

According to a second aspect of the disclosure, there is provided a vehicle comprising the computer system of the first aspect. The second aspect of the disclosure may seek to provide a vehicle capable of being manoeuvred without a pulling unit or a steering column/wheel. This enables the vehicle to be manoeuvred in smaller spaces and to be manoeuvred remotely and/or autonomously.

Optionally in some examples, including in at least one preferred example, one or more of the left rear wheel and the right rear wheel is non-pivoted. A technical benefit may include that simpler control of the steering angle of the front wheel of a dolly vehicle is provided as the other wheels do not contribute to the steering in the same way.

Optionally in some examples, including in at least one preferred example, one or more of the left rear wheel and the right rear wheel is electrically driven. A technical benefit may include that the appropriate drive torque can be applied easily in order to control the steering angle of the front wheel.

Optionally in some examples, including in at least one preferred example, the front wheel is pivotable around a vertical axis of the vehicle by at least 90° from a straight position. A technical benefit may include that a large range of steering angles can be implemented at the front wheel which can enable more precise manoeuvring e.g. in smaller spaces.

According to a third aspect of the disclosure, there is provided a computer-implemented method for manoeuvring a dolly vehicle comprising a pivoted front wheel, a left rear wheel, and a right rear wheel, the computer-implemented method comprising: acquiring, by processing circuitry of a computer system, a desired steering angle for the pivoted front wheel; determining, by the processing circuitry, a steering moment to provide the desired steering angle at the pivoted front wheel; and determining, by the processing circuitry, a drive torque for one or more of the left rear wheel and the right rear wheel to provide the determined steering moment.

The third aspect of the disclosure may seek to provide improved control of the steering angle of the front wheel of a dolly vehicle. By determining and applying torque individually at the right and left rear wheels, the dolly vehicle can be manoeuvred without a pulling unit or a steering column/wheel. This enables the dolly vehicle to be manoeuvred in smaller spaces and to be manoeuvred remotely and/or autonomously.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to be manoeuvred without a pulling unit or a steering column/wheel. This enables the vehicle to be manoeuvred in smaller spaces and to be manoeuvred remotely and/or autonomously.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to be manoeuvred without a pulling unit or a steering column/wheel. This enables the vehicle to be manoeuvred in smaller spaces and to be manoeuvred remotely and/or autonomously.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

**FIGs. 1A to 1C** schematically show vehicle combinations according to examples of the disclosure.
**FIG. 2** schematically shows a top view of a dolly vehicle according to an example of the disclosure.
**FIG. 3** is a flow chart of a computer-implemented method according to an example of the disclosure.
**FIG. 4** is a schematic diagram of a computer system for implementing examples disclosed herein.

Like reference numerals refer to like elements throughout the description.

**DETAILED DESCRIPTION**

The detailed description set forth below provides information and examples of the disclosed technology with sufficient detail to enable those skilled in the art to practice the disclosure.

A traditional dolly vehicle is an unpowered vehicle unit designed for connection to a tractor unit, truck or prime mover vehicle with strong traction power. Dolly vehicles comprising on-board power sources such as electrical machines and dolly vehicles with one or more steered axles have recently been proposed. However, dolly vehicles typically do not have steering on all axles, which can make it hard to control the steering angle of such axles. As such, the dolly vehicle becomes difficult to manoeuvre without using a pulling unit, which inherently limits the space in which such a dolly vehicle can be manoeuvred.

To remedy this, systems, methods and other approaches are provided for manoeuvring a three-wheeled dolly vehicle having a pivoted front wheel and left and right rear wheels, for example a drawbar trailed. A desired steering angle is acquired for the pivoted front wheel along with a corresponding steering moment. Positive (propulsion) and/or negative (braking, reverse) torques for the rear wheels are then determined in order to provide the steering moment required to implement the desired steering angle. In this way, the steering angle of the front wheel of the dolly vehicle can be controlled by applying positive or negative torque individually at the right and left sides of the rear wheels, and the dolly vehicle can be manoeuvred without a pulling unit or a steering column/wheel. This enables the dolly vehicle to be manoeuvred in smaller spaces and to be manoeuvred remotely and/or autonomously.

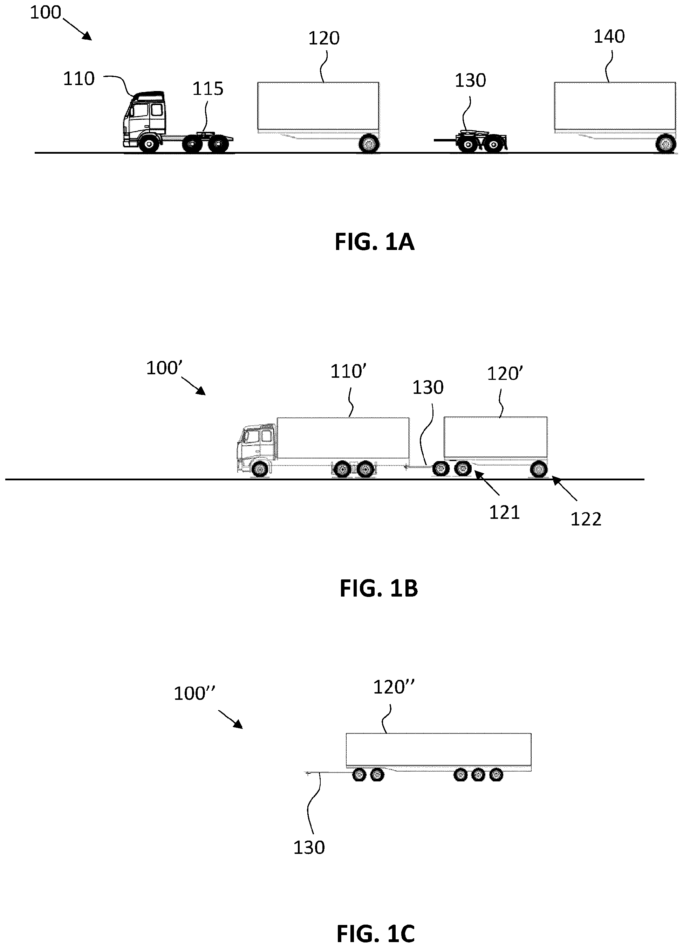

**FIG. 1A** schematically shows an example vehicle combination **100** for cargo transport of the type considered in this disclosure. The vehicle combination **100** comprises a tractor unit **110** (e.g. a truck or towing vehicle) configured to tow a first trailer unit **120** in a known manner, e.g., by a fifth wheel connection **115**. To extend the cargo transport capability of the vehicle combination **100,** a dolly vehicle **130** can be connected to the rear of the first trailer unit **120,** for example via a drawbar. This dolly vehicle **130** can then tow a second trailer unit **140,** thus increasing the cargo transport capacity of the vehicle combination **100.** More than one dolly vehicle **130** unit can be added to a vehicle combination **100** in order to tow more than one extra trailer unit, giving rise to different types and designations of vehicle combinations. The concepts disclosed herein can therefore be extended to multiple trailers towed by one tractor unit **110.**

A tractor unit, such as the tractor unit **110,** is generally the foremost unit in a vehicle combination **100,** and may comprise the cabin for the driver, including steering controls, dashboard displays and the like. Generally, the tractor unit **110** is used to provide propulsion power for the vehicle combination **100.**

A trailing unit, such as the trailing units **120, 140,** is generally used to store goods that are being transported by the vehicle combination **100.** A trailing unit may be a truck, trailer, and the like. A trailing unit may also provide propulsion to the vehicle combination **100.** A trailing unit without a front axle, such as the trailing unit **120,** is known as a semi-trailer. In vehicle combinations such as that shown in **FIG. 1A,** vehicle motion management may be available on a unit level to receive requests from a manual or virtual driver to coordinate the propulsion, braking and steering.

Whilst three tractor axles and one axle per trailer are shown, it will be appreciated that any suitable number of axles may be provide on the respective units. It will also be appreciated that any number of the tractor axles and/or trailer axles may be driven axles, including zero (i.e. one of the units may include at least one driven axle while the other does not).

The vehicle combination **100** may comprise one or more sources of propulsion. For example, any of the tractor units **110** and the trailer units **120, 140** may comprise one or more electrical machines such as electric motors configured to drive, e.g. provide torque and/or steering to, one or more axles or individual wheels of the unit. The electrical machines of a unit can supply either a positive (propulsion) or negative (braking, reverse) torque or force. Furthermore, each unit may comprise one or more sets of service brakes, for example frictional brakes such as pneumatic brakes, configured to supply a negative (braking, reverse) torque or force. Each unit may comprise one or more batteries configured to provide power to the electrical machines. In some examples, electric motors may also be operated as generators, in order for the electric motors to generate braking force when required. The use of electrical machines to supply a negative force is known as regenerative braking. The energy recovered from regenerative braking can be stored in the batteries, and so regenerative braking is generally preferred to using service brakes. In some examples, a unit, most often a tractor unit **110,** may also include another source of propulsion, for example an internal combustion engine. The vehicle combination **100** also comprises a drivetrain to deliver mechanical power from the propulsion source (the electrical machines or the ICE) to the wheels. All units may provide propulsion to the vehicle combination **100.**

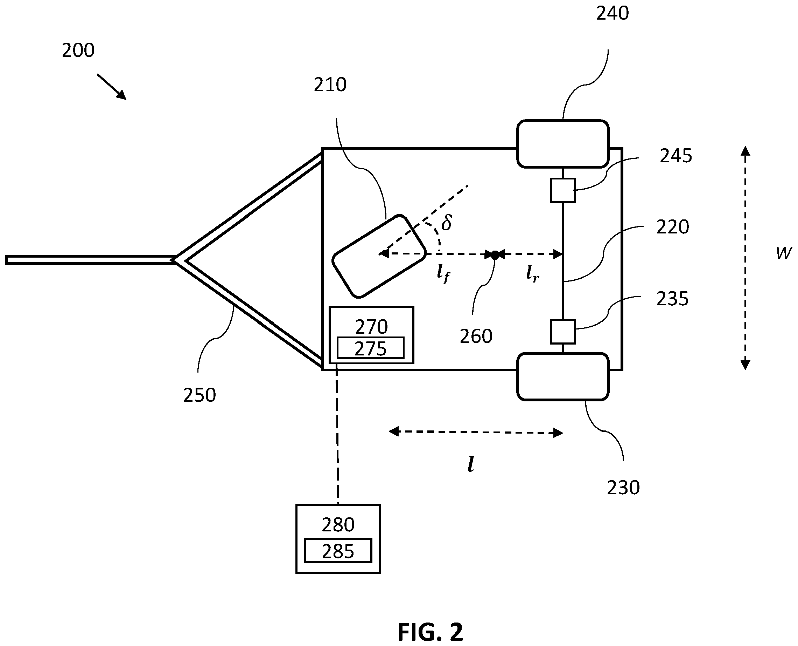

A dolly vehicle **130** is traditionally a passive vehicle comprising no driven or steerable axles, and with a relatively short wheelbase. However, it has recently been shown that self-powered dolly vehicles may provide increased fuel efficiency, manoeuvrability, and stability. Increased fuel efficiency may be obtained if an electrical machine arranged for regenerative braking is installed in the dolly vehicle. The increased manoeuvrability may be obtained by a dolly vehicle comprising one or more steerable axles. This can be used for improving turning ability of the combination vehicle, since the dolly vehicle can be used to steer an associated trailer unit as the vehicle combination turns in order to reduce the total area swept by the vehicle combination. This allows longer vehicle combinations to negotiate sharper curves, thus extending the operational domain of such longer vehicles to, e.g., urban environments. A self-powered dolly vehicle can also improve startability, since the dolly vehicle is then able to generate extra torque when bringing the vehicle combination into motion from a stand-still. Vehicle stability may be a limiting factor in the maximum load possible to carry, and a self-powered dolly vehicle may therefore contribute to an increased cargo capacity. A particular type of dolly vehicle **130** will be discussed in relation to **FIG. 2.**

The approaches disclosed herein are applicable to any suitable form of vehicle, including heavy-duty vehicles, such as trucks, buses, and construction equipment. In particular the approaches disclosed herein can be applied to other vehicle combinations, such as so-called truck and full trailer combinations **100',** as illustrated in **FIG. 1B.** These vehicles comprise a tractor unit **110'** arranged to tow a full trailer unit **120'**. In the example of **FIG. 1B,** the tractor unit **110'** is also used to store goods that are being transported by the vehicle combination **100'.** A full trailer unit **120'** is a trailer which is able to fully support itself on the ground, i.e., it comprises both front **121** and rear **122** trailer axles.

**FIG. 1C** shows a vehicle **100"** comprising only a self-powered dolly vehicle **130** and a first trailer unit **120".** In this configuration the self-powered dolly vehicle **130** is the towing vehicle and operates in an autonomous or semi-autonomous manner. The dolly vehicle **130** can then autonomously or via remote control manoeuvre the first trailer unit **120",** for instance to park the trailer or bring it up to a loading bay. The remote control may be performed by an external server or control function connected to the dolly vehicle control unit via wireless link, as will be discussed below.

**FIG. 2** schematically shows a top view of a dolly vehicle **200** of the type considered in this disclosure, such as the dolly vehicle **130.** The dolly vehicle **200** comprises a pivoted front wheel **210,** and a rear axle **220** connected to a left rear wheel **230** and a right rear wheel **240.** The dolly vehicle **200** has a track width w and a wheelbase $l$. The dolly vehicle **200** is connectable to a preceding unit via a drawbar **250** and to a trailing unit via a kingpin coupling (not shown) around which the dolly vehicle **200** (and/or the trailing unit) can rotate, as known in the art. When in motion, the dolly vehicle **200** may be subject to a longitudinal force $F_x$, a lateral force $F_y$, and a yaw moment $M_z$.

The pivoted front wheel **210** is pivotable around a vertical axis of the dolly vehicle 200 to provide a steering angle $\delta$. In some examples, the pivoted front wheel **210** is pivotable by at least 90° in either direction from a straight position defined, for example, by a longitudinal axis of the dolly vehicle **200.** In some examples, the pivoted front wheel **210** is not a steerable wheel, i.e. there is no steering actuator configured to steer the pivoted front wheel **210,** even though it is still capable of pivoted motion due to other motion forces. A steering moment for the dolly vehicle **200** to provide (i.e. implement) a steering angle $\delta$ at a non-steerable front wheel **210** can be denoted $M_{st}$.

In some examples, the pivoted front wheel **210** is a driven wheel, driven by a respective source of propulsion such as an electrical machine (not shown). A driven front wheel **210** may be subjected to a drive torque $T_{el1}$. In other embodiments, the pivoted front wheel **210** is not a driven wheel, i.e. there is no propulsion source configured to drive the pivoted front wheel **210.** A distance from (an axle of) the pivoted front wheel **210** to the centre of gravity (or centre of mass) **260** of the dolly vehicle **200** is denoted $l_f$. The pivoted front wheel **210** may have a wheel (or tyre) radius denoted $R_1$.

The left rear wheel **230** and right rear wheel **240** are driven by respective sources of propulsion. As such, torque/force is provided to drive the dolly vehicle **200** via the left and right rear wheels **230, 240.** As discussed above, electrical machines of a unit can supply either a positive (propulsion) or negative (braking, reverse) torque/force. The left and right rear wheels **230, 240** are driven by respective electrical machines **235, 245.** As such, the left and right rear wheels **230, 240** can be driven independently; the left rear wheel **230** may be subjected to a drive torque $T_{el2}$ applied by the electrical machine **235,** while the right rear wheel **240** may be subjected to a drive torque $T_{el3}$ applied by the electrical machine **245.**

In some examples, the left and right rear wheels **230, 240** are non-pivoted (and, by definition, non-steerable), although in some examples it will be appreciated that the left and/or right rear wheel **230, 240** may be pivoted and optionally steerable, either in tandem or individually. A distance from the rear axle **220** to the centre of gravity **260** is denoted $l_r$. The left rear wheel **230** may have a wheel (or tyre) radius denoted $R_2$, while the right rear wheel **240** may have a wheel (or tyre) radius denoted $R_3$.

The dolly vehicle **200** may also comprise an on-board energy source (not shown), such as a battery, super-capacitor, fuel cell, or other device arranged to store electrical energy and provide power to the electrical machines **235, 245.** Combinations of different types of energy sources can also be used. In some examples, the electrical machines **235, 245** may also be operated as generators in a regenerative braking scenario when required. A traditional fuel tank for storing gasoline or diesel fuel can of course also be considered an energy source in this context. The present disclosure, however, focuses on propulsion arrangements based on electrical machines powered by an electrical energy storage device, such as a battery or a fuel cell stack.

The dolly vehicle **200** may include a controller **270** comprising processing circuitry **275.** The controller **270** is configured to control components of the dolly vehicle **200,** for example the electrical machines **235, 245. FIG. 2** shows a common controller **270** for both electrical machines **235, 245,** however it will be appreciated that each electrical machine **235, 245** may have its own respective controller **270.** In many cases, the controller **270** may be implemented in the structure of the electrical machine **235, 245** itself. The controller **270** may be a microcontroller. In some examples, the controller **270** is configured to control a position of the kingpin, as known in the art.

The controller **270** may receive control signals from a global controller **280** comprising processing circuitry **285.** The global controller **280** may be a vehicle control unit configured to perform various vehicle (unit) control functions, such as vehicle motion management. The global controller **280** may be local to the dolly vehicle **200,** for example implemented as part of a controller **270,** or may be a remote system, implemented at a distance from the dolly vehicle **200,** for example in a vehicle combination comprising the dolly vehicle **200** or elsewhere. The global controller **280** may be communicatively coupled to the controller **270** in any suitable way, for example via a circuit or any other wired, wireless, or network connection known in the art. Furthermore, the communicative coupling may be implemented as a direct connection between the controller **270** and the global controller **280** or may be implemented as a connection via one or more intermediate entities.

One function of the controller **270** and the global controller **280** is to provide control inputs for the dolly vehicle **200,** for example torque or force to be applied by the electrical machines **235, 245.** These control inputs may be determined based on desired motion of the dolly vehicle **200,** for example a desired steering angle $\delta$ for the pivoted front wheel **210.** It is desirable that such control is capable of manoeuvring the dolly vehicle **200** in an improved manner.

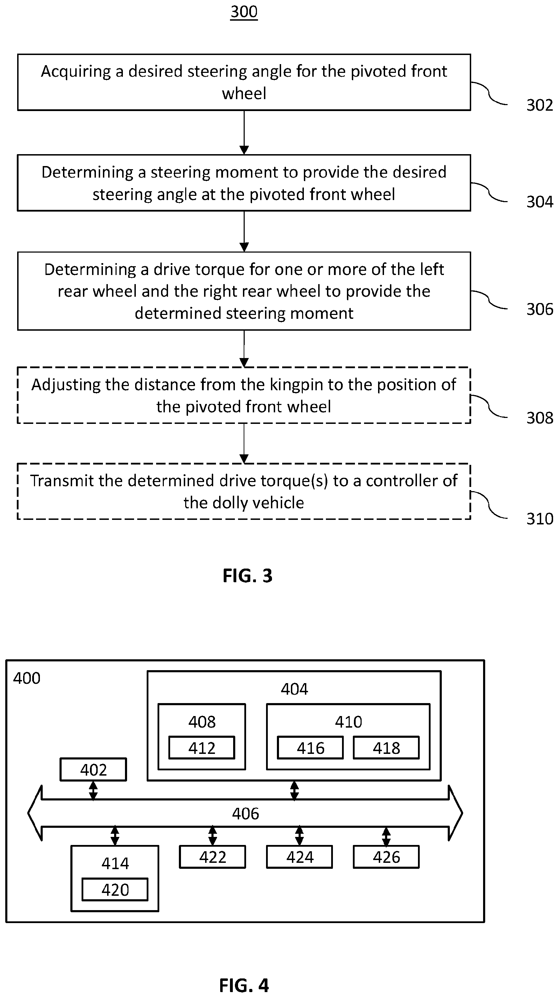

**FIG. 3** is a flow chart of a computer-implemented method **300** according to an example. The method **300** is for manoeuvring a dolly vehicle comprising a pivoted front wheel and left and right rear wheels, such as the dolly vehicle **200** described in relation to **FIG. 2.** The method **300** enables such a dolly vehicle to be manoeuvred in smaller spaces, remotely and/or autonomously, and without a towing unit. The method **300** may be implemented by processing circuitry of a computer system (e.g., the processing circuitry **275** of the controller(s) **270** or the processing circuitry **285** of the global controller **280** described in relation to **FIG. 2).**

At **302,** a desired steering angle $\delta$ for the pivoted front wheel **210** is acquired. The desired steering angle $\delta$ may be related to a manoeuvre for the dolly vehicle **200,** for example parking, cornering, turning, stability enhancement, and the like. The desired steering angle, $\delta$, may be received from an automated or semi-automated drive system, a lane assist system, a lane following system, an emergency steering system, and/or from an operator input e.g. to a steering wheel or other user interface associated with the dolly vehicle **200** or a vehicle combination comprising the dolly vehicle **200.**

At **304,** a steering moment $M_{st}$ is determined to provide (i.e. implement) the desired steering angle $\delta$ at the pivoted front wheel **210.** That is to say, the necessary steering moment $M_{st}$ that should be applied to the dolly vehicle **200** to cause the pivoted front wheel **210** to have a steering angle $\delta$ is determined. As discussed above, the pivoted front wheel **210** may not be steerable i.e. there is no steering actuator configured to steer the pivoted front wheel **210.** In these examples, a steering moment $M_{st}$ must be applied via other motion forces in order to implement the desired steering angle $\delta$ at the pivoted front wheel **210.** As will be discussed below, this can be achieved by determining a drive torque $T_{el2}$ for the left rear wheel **230** and/or a drive torque $T_{el3}$ for the right rear wheel **240.**

The steering moment $M_{st}$ can be determined in any suitable manner known to the skilled person, for example based on the dimensions, mass, etc. of the dolly vehicle **200.** For example, $M_{st}$ can be determined using a controller (such as a proportional (P) or proportional-integral (PI) controller) based on the desired steering angle $\delta$.

The turning radius *r* of the dolly vehicle **200** can be expressed as follows:

$$r = \frac{l}{\tan(\delta)} \qquad (1)$$

and the linear velocity $v_L$ of the left rear wheel 230 and linear velocity $v_R$ of the rear wheel 240 can be expressed as follows:

$$v_L = \omega_V * \left( r + \frac{w}{2} \right) \qquad (2)$$

$$v_R = \omega_V * \left( r + \frac{w}{2} \right) \qquad (3)$$

where $\omega_V$ is a (rotational) vehicle speed, and w is the track width. The turning radius r is then equal to:

$$r = \frac{w}{2} \frac{v_L + v_R}{v_L - v_R} \qquad (4)$$

which can be rewritten in a simplified manner as a function of the drive torques applied at the left rear wheel 230 and the right rear wheel 240 as:

$$r = \frac{w}{2} \frac{T_{el2} + T_{el3}}{T_{el2} - T_{el3}} \qquad (5)$$

Combining equations (1) and (5) and assuming the torque for steering (or differential torque) $\Delta T = T_{el3} - T_{el2}$ is equal to the steering moment $M_{st}$, the desired steering angle $\delta$ can be expressed as follows:

$$\tan(\delta) = \frac{2 * l}{w} \frac{T_{el3} - T_{el2}}{T_{el2} + T_{el3}} = \frac{2 * l}{w} * \frac{M_{st}}{T_{el2} + T_{el3}} \qquad (6)$$

From equation (6) it can be seen how the steering angle $\delta$ and the steering moment $M_{st}$ are related, and so a use a P or PI controller can be used for calculating the steering moment $M_{st}$ based on the desired steering angle $\delta$.

In some examples, the steering moment $M_{st}$ is determined based on the distance $I_f$ from (an axle of) the pivoted front wheel **210** to the centre of gravity **260** of the dolly vehicle **200**. Normal loads and grip margins for the three wheels **210, 230, 240** are dependent on the mass distribution of the dolly vehicle **200** and/or moment of inertia of the dolly vehicle **200,** which are dependent on the position of the centre of gravity **260**. For example, heavier components located farther from the center of rotation increase the moment of inertia. Furthermore, the position of the kingpin relative to the pivoted front wheel **210** will affect the position of the centre of gravity **260** of the dolly vehicle **200**. As such, normal loads and grip margins for the three wheels **210, 230, 240** are dependent on the kingpin position, and a change in the kingpin position will affect the steering moment $M_{st}$ required to provide the desired steering angle $\delta$. The moment of inertia of the dolly vehicle 200 is also influenced by the torque for steering $\Delta T = T_{el3} - T_{el2}$, which is equal to the steering moment $M_{st}$ in steady state.

In some examples, the steering moment $M_{st}$ is determined based on the dimensions (e.g. width, radius $R_1$) of the pivoted front wheel **210**. For example, using wider tires on the front of the dolly vehicle **200** will affect the steering moment $M_{st}$ required to provide the desired steering angle $\delta$ due to a change in the force distribution and/or rolling resistance of the dolly vehicle **200.**

At **306,** a drive torque for one or more of the left rear wheel **230** and the right rear wheel **240** to provide (i.e. implement) the determined steering moment $M_{st}$ is determined. For example, a drive torque $T_{el2}$ for the left rear wheel **230** and/or a drive torque $T_{el3}$ for the right rear wheel **240** may be determined. The drive torque $T_{el2}$, $T_{el3}$ can be determined in any suitable manner known to the skilled person, for example based on the dimensions, mass, etc. of the dolly vehicle **200.** For example, the torque for steering $\Delta T = T_{el3} - T_{el2}$ is equal to the steering moment $M_{st}$ in steady state, which enables the drive torque $T_{el2}$ for the left rear wheel **230** and the drive torque $T_{el3}$ for the right rear wheel **240** to be determined once the steering moment $M_{st}$ is known. Each drive torque $T_{el2}$, $T_{el3}$ may be either positive or negative (or zero).

In particular, a torque differential may be provided between the left rear wheel **230** and the right rear wheel **240** in order to provide (i.e. implement) a resultant steering moment $M_{st}$ of the dolly vehicle **200** that causes the pivoted front wheel **210** to have a steering angle $\delta$. For example, if a positive drive torque $T_{el2}$ for the left rear wheel **230** is higher than a positive drive torque $T_{el3}$ for the right rear wheel **240**, a steering moment $M_{st}$ will be provided towards the right in a direction of travel of the dolly vehicle **200**. This will cause the pivoted front wheel **210** to turn towards the right. Similarly, if a positive drive torque $T_{el2}$ for the left rear wheel **230** is lower than a positive drive torque $T_{el3}$ for the right rear wheel **240**, a steering moment $M_{st}$ will be provided towards the left in a direction of travel of the dolly vehicle **200**. This will cause the pivoted front wheel **210** to turn towards the left. It will be appreciated that, in some examples, the drive torques $T_{el2}$, $T_{el3}$ may both be negative, one drive torque $T_{el2}$, $T_{el3}$ may be positive while the other is negative, or one drive torque $T_{el2}$, $T_{el3}$ may be zero while the other is non-zero. These different possibilities lead to a wide range of control being available for the steering moment $M_{st}$ and resultant steering angle $\delta$ of the pivoted front wheel **210**.

In some examples, when the pivoted front wheel **210** is a driven wheel, a drive torque $T_{el1}$ for the pivoted front wheel **210** may also be determined. This approach may be more suitable for low-speed manoeuvring. For high-speed manoeuvring, a driven front wheel **210** may be locked or its resistance to steer increased.

In some examples, the drive torque(s) $T_{el1}$, $T_{el2}$, $T_{el3}$ may be determined according to:

$$\begin{bmatrix} F_x \\ F_y \\ M_z \\ M_{st} \end{bmatrix} = \begin{bmatrix} \dfrac{1}{R_1} & \dfrac{1}{R_2} & \dfrac{\cos\delta}{R_3} \\ 0 & 0 & \dfrac{\sin\delta}{R_3} \\ -\dfrac{w}{2R_1} & \dfrac{w}{2R_2} & \dfrac{\sin\delta}{R_3}l_f \\ 1 & -1 & 0 \end{bmatrix} \begin{bmatrix} T_{el2} \\ T_{el3} \\ T_{el1} \end{bmatrix} \qquad (7)$$

where $R_1$, $R_2$, $R_3$, and $l_f$ are known values and $F_x$, $F_y$, and $M_z$ are determined in any suitable manner known to the skilled person. In some examples, the approach shown in equation (7) will provide drive torques $T_{el1}$, $T_{el2}$, $T_{el3}$ for all three wheels **210, 230, 240**. If it is desired, for example, to only determine torques for the rear wheels **230, 240**, for example if the pivoted front wheel **210** is not a driven wheel, the value for $T_{el3}$ may be constrained to zero (or near-zero to avoid potential numerical problems).

In some examples, at **308**, the distance from (an axle of) the pivoted front wheel **210** to the kingpin may be adjusted in order to adjust required the drive torque(s). As discussed above, the position of the kingpin relative to the pivoted front wheel **210** will affect the position of the centre of gravity **260** of the dolly vehicle **200**, upon which normal loads and grip margins for the three wheels **210, 230, 240** are dependent. The position of the kingpin may be adjustable during operation of the dolly vehicle **200**, as known in the art. As such, the capabilities of wheel forces can be defined and adjusted by changing the kingpin position, meaning that motion control of the dolly vehicle **200** can be adapted to different driving scenarios and situations. For example, moving the kingpin position towards the rear wheel will cause an increased load on the rear wheels **230, 240**, resulting in greater grip and traction on the rear wheels **230, 240** and a decreased load on the front wheel **210**. This will affect the steering dynamics. Adjusting the position of the kingpin can therefore enhance stability during braking, shorten the wheelbase of a trailer connected behind the dolly, and enhance manoeuvrability of the whole vehicle combination while cornering, resulting in decreased off-tracking. Adjusting the position of the kingpin can also shift the load toward the rear wheels **230, 240** to comply with regulatory limitations on the load applied to the front wheel **210**.

In some examples, at **310**, the determined drive torque(s) may be transmitted to a controller configured to control motion of one or more of the wheels **210, 230** of the dolly vehicle **200**. For example, if the method **300** is performed at the global controller **280**, the determined drive torque(s) may be transmitted to the controller(s) **270**. The determined drive torque(s) may then be used in controlling motion of the dolly vehicle **200** such that the desired steering angle $\delta$ is implemented at the pivoted front wheel **210**.

In some examples, the drawbar **250** of the dolly vehicle **200** can be folded and stowed, for example when the dolly vehicle is remotely controlled and/or operates autonomously. For example, a fully extended drawbar **250** may provide a hindrance to safe and efficient manoeuvring of the dolly vehicle **200**. As such, the drawbar **250** may be made foldable and/or retractable. For example, one or more arms of the drawbar **250** may be foldable, for example part way along the length of the drawbar **250**. Alternatively or additionally, the dolly vehicle **200** may comprise a retraction mechanism to at least partially retract the drawbar **250** into the main body of the dolly vehicle **200**, for example a sliding or telescoping mechanism. When retracted, the drawbar **250** has a clearance from the pivoted front wheel **210** of the dolly vehicle **200**. This reduces the overall profile of the dolly vehicle **200** to facilitate manoeuvring.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (270, 280, 400) for manoeuvring a dolly vehicle (200) comprising a pivoted front wheel (210), a left rear wheel (230), and a right rear wheel (240), the computer system (270, 280, 400) comprising processing circuitry (275, 285, 402) configured to: acquire a desired steering angle ($\delta$) for the pivoted front wheel (210); determine a steering moment ($M_{st}$) to provide the desired steering angle ($\delta$) at the pivoted front wheel (210); and determine a drive torque ($T_{el2}$, $T_{el3}$) for one or more of the left rear wheel (230) and the right rear wheel (240) to provide the determined steering moment ($M_{st}$).

Example 2: The computer system (270, 280, 400) of example 1, wherein the processing circuitry (275, 285, 402) is configured to determine the steering moment ($M_{st}$) based on the distance ($l_f$) from the centre of gravity (260) of the dolly vehicle (200) to the position of the pivoted front wheel (210).

Example 3: The computer system (270, 280, 400) of example 1 or 2, wherein the processing circuitry (275, 285, 402) is configured to adjust the distance from a kingpin of the dolly vehicle (200) to the position of the pivoted front wheel (210) to adjust the drive torque required for one or more of the left rear wheel (230) and the right rear wheel (240) to provide the determined steering moment ($M_{st}$).

Example 4: The computer system (270, 280, 400) of any preceding example, wherein the processing circuitry (275, 285, 402) is configured to determine the steering moment ($M_{st}$) based on the dimensions of the pivoted front wheel (210).

Example 5: The computer system (270, 280, 400) of any preceding example, wherein the processing circuitry (275, 285, 402) is configured to determine a drive torque ($T_{el1}$) for the pivoted front wheel (210).

Example 6: The computer system (270, 280, 400) of any preceding example, wherein the processing circuitry (275, 285, 402) is configured to determine a drive torque ($T_{el1}$, $T_{el2}$, $T_{el3}$) for one or more of the left rear wheel (230), the right rear wheel (230), and the pivoted front wheel (210) according to:

$$\begin{bmatrix} F_x \\ F_y \\ M_z \\ M_{st} \end{bmatrix} = \begin{bmatrix} \dfrac{1}{R_1} & \dfrac{1}{R_2} & \dfrac{\cos\delta}{R_3} \\ 0 & 0 & \dfrac{\sin\delta}{R_3} \\ -\dfrac{w}{2R_1} & \dfrac{w}{2R_2} & \dfrac{\sin\delta}{R_3}\, l_f \\ 1 & -1 & 0 \end{bmatrix} \begin{bmatrix} T_{el2} \\ T_{el3} \\ T_{el1} \end{bmatrix}$$

where $F_x$ is the longitudinal force on the dolly vehicle (200), $F_y$ is the lateral force on the dolly vehicle (200), $M_z$ is the yaw moment of the dolly vehicle (200), $R_1$ is the radius of the pivoted front wheel (210), $R_2$ is the radius of the pivoted left rear wheel (230), $R_3$ is the radius of the right rear wheel (240), and $l_f$ is the distance from the centre of gravity (260) of the dolly vehicle (200) to the position of the front wheel (210).

Example 7: The computer system (270, 280, 400) of any preceding example, wherein the drive torque ($T_{el1}$, $T_{el2}$, $T_{el3}$) comprises one or more of a positive torque and a negative torque.

Example 8: The computer system (270, 280, 400) of any preceding example, wherein the processing circuitry (275, 285, 402) is configured to transmit the determined drive torque ($T_{el1}$, $T_{el2}$, $T_{el3}$) to a controller (270, 280, 400) of the dolly vehicle (200) configured to control motion of one or more of the wheels (210, 230, 240).

Example 9: A vehicle (100, 100', 100", 200) comprising the computer system (270, 280, 400) of any preceding example.

Example 10: The vehicle (100, 100', 100", 200) of example 9, wherein one or more of the left rear wheel (230) and the right rear wheel (240) is non-pivoted.

Example 11: The vehicle (100, 100', 100", 200) of example 9 or 10, wherein one or more of the left rear wheel (230) and the right rear wheel (240) is electrically driven.

Example 12: The vehicle (100, 100', 100", 200) of any of examples 9 to 11, wherein the front wheel (210) is pivotable around a vertical axis of the vehicle by at least 90° from a straight position.

Example 13: A computer-implemented method (300) for manoeuvring a dolly vehicle (200) comprising a pivoted front wheel (210), a left rear wheel (230), and a right rear wheel (240), the computer-implemented method (300) comprising: acquiring (302), by processing circuitry (275, 285, 402) of a computer system (270, 280, 400), a desired steering angle ($\delta$) for the pivoted front wheel (210); determining (304), by the processing circuitry (275, 285, 402), a steering moment ($M_{st}$) to provide the desired steering angle ($\delta$) at the pivoted front wheel (210); and determining (306), by the processing circuitry (275, 285, 402), a drive torque ($T_{el2}$, $T_{el3}$) for one or more of the left rear wheel (230) and the right rear wheel (240) to provide the determined steering moment ($M_{st}$).

Example 14: The computer-implemented method (300) of example 13, comprising determining, by the processing circuitry (275, 285, 402), the steering moment ($M_{st}$) based on the distance ($l_f$) from the centre of gravity (260) of the dolly vehicle (200) to the position of the pivoted front wheel (210).

Example 15: The computer-implemented method (300) of example 13 or 14, comprising adjusting, by the processing circuitry (275, 285, 402), the distance from a kingpin of the dolly vehicle (200) to the position of the pivoted front wheel (210) to adjust the drive torque required for one or more of the left rear wheel (230) and the right rear wheel (240) to provide the determined steering moment ($M_{st}$).

Example 16: The computer-implemented method (300) of any of examples 13 to 15, comprising determining, by the processing circuitry (275, 285, 402), the steering moment ($M_{st}$) based on the dimensions of the pivoted front wheel (210).

Example 17: The computer-implemented method (300) of any of examples 13 to 16, comprising determining, by the processing circuitry (275, 285, 402), a drive torque ($T_{el1}$) for the pivoted front wheel (210).

Example 18: The computer-implemented method (300) of any of examples 13 to 17, comprising determining, by the processing circuitry (275, 285, 402), a drive torque ($T_{el1}$, $T_{el2}$, $T_{el3}$) for one or more of the left rear wheel (230), the right rear wheel (230), and the pivoted front wheel (210) according to:

$$
\begin{bmatrix} F_x \\ F_y \\ M_z \\ M_{st} \end{bmatrix} = \begin{bmatrix} \dfrac{1}{R_1} & \dfrac{1}{R_2} & \dfrac{\cos\delta}{R_3} \\ 0 & 0 & \dfrac{\sin\delta}{R_3} \\ -\dfrac{w}{2R_1} & \dfrac{w}{2R_2} & \dfrac{\sin\delta}{R_3} l_f \\ 1 & -1 & 0 \end{bmatrix} \begin{bmatrix} T_{el2} \\ T_{el3} \\ T_{el1} \end{bmatrix}
$$

where $F_x$ is the longitudinal force on the dolly vehicle (200), $F_y$ is the lateral force on the dolly vehicle (200), $M_z$ is the yaw moment of the dolly vehicle (200), $R_1$ is the radius of the pivoted front wheel (210), $R_2$ is the radius of the pivoted left rear wheel (230), $R_3$ is the radius of the right rear wheel (240), and $l_f$ is the distance from the centre of gravity (260) of the dolly vehicle (200) to the position of the front wheel (210).

Example 19: The computer-implemented method (300) of any of examples 13 to 18, wherein the drive torque ($T_{el1}$, $T_{el2}$, $T_{el3}$) comprises one or more of a positive torque and a negative torque.

Example 20: The computer-implemented method (300) of any of examples 13 to 19, comprising transmitting, by the processing circuitry (275, 285, 402), the determined drive torque ($T_{el1}$, $T_{el2}$, $T_{el3}$) to a controller (270, 280, 400) of the dolly vehicle (200) configured to control motion of one or more of the wheels (210, 230, 240).

Example 21: A computer program product comprising program code for performing, when executed by processing circuitry (275, 285, 402), the computer-implemented method (300) of any of examples 13 to 20.

Example 22: A non-transitory computer-readable storage medium comprising instructions, which when executed by processing circuitry (275, 285, 402), cause the processing circuitry to perform the computer-implemented method (300) of any of examples 13 to 20.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (270, 280, 400) for manoeuvring a dolly vehicle (200) comprising a pivoted front wheel (210), a left rear wheel (230), and a right rear wheel (240), the computer system (270, 280, 400) comprising processing circuitry (275, 285, 402) configured to:

   acquire a desired steering angle ($\delta$) for the pivoted front wheel (210);
   determine a steering moment ($M_{st}$) to provide the desired steering angle ($\delta$) at the pivoted front wheel (210); and
   determine a drive torque ($T_{el2}, T_{el3}$) for one or more of the left rear wheel (230) and the right rear wheel (240) to provide the determined steering moment ($M_{st}$).

2. The computer system (270, 280, 400) of claim 1, wherein the processing circuitry (275, 285, 402) is configured to determine the steering moment ($M_{st}$) based on the distance ($l_f$) from the centre of gravity (260) of the dolly vehicle (200) to the position of the pivoted front wheel (210).

3. The computer system (270, 280, 400) of claim 1 or 2, wherein the processing circuitry (275, 285, 402) is configured to adjust the distance from a kingpin of the dolly vehicle (200) to the position of the pivoted front wheel (210) to adjust the drive torque required for one or more of the left rear wheel (230) and the right rear wheel (240) to provide the determined steering moment ($M_{st}$).

4. The computer system (270, 280, 400) of any preceding claim, wherein the processing circuitry (275, 285, 402) is configured to determine the steering moment ($M_{st}$) based on the dimensions of the pivoted front wheel (210).

5. The computer system (270, 280, 400) of any preceding claim, wherein the processing circuitry (275, 285, 402) is configured to determine a drive torque ($T_{el1}$) for the pivoted front wheel (210).

6. The computer system (270, 280, 400) of any preceding claim, wherein the processing circuitry (275, 285, 402) is configured to determine a drive torque ($T_{el1}, T_{el2}, T_{el3}$) for one or more of the left rear wheel (230), the right rear wheel (230), and the pivoted front wheel (210) according to:

$$
\begin{bmatrix} F_x \\ F_y \\ M_z \\ M_{st} \end{bmatrix} = \begin{bmatrix} \dfrac{1}{R_1} & \dfrac{1}{R_2} & \dfrac{\cos\delta}{R_3} \\[2ex] 0 & 0 & \dfrac{\sin\delta}{R_3} \\[2ex] -\dfrac{w}{2R_1} & \dfrac{w}{2R_2} & \dfrac{\sin\delta}{R_3}\, l_f \\[2ex] 1 & -1 & 0 \end{bmatrix} \begin{bmatrix} T_{el2} \\ T_{el3} \\ T_{el1} \end{bmatrix}
$$

where $F_x$ is the longitudinal force on the dolly vehicle (200), $F_y$ is the lateral force on the dolly vehicle (200), $M_z$ is the yaw moment of the dolly vehicle (200), $R_1$ is the radius of the pivoted front wheel (210), $R_2$ is the radius of the pivoted left rear wheel (230), $R_3$ is the radius of the right rear wheel (240), and $l_f$ is the distance from the centre of gravity (260) of the dolly vehicle (200) to the position of the front wheel (210).

7.  The computer system (270, 280, 400) of any preceding claim, wherein the drive torque ($T_{el1}$, $T_{el2}$, $T_{el3}$) comprises one or more of a positive torque and a negative torque.

8.  The computer system (270, 280, 400) of any preceding claim, wherein the processing circuitry (275, 285, 402) is configured to transmit the determined drive torque ($T_{el1}$, $T_{el2}$, $T_{el3}$) to a controller (270, 280, 400) of the dolly vehicle (200) configured to control motion of one or more of the wheels (210, 230, 240).

9.  A vehicle (100, 100', 100", 200) comprising the computer system (270, 280, 400) of any preceding claim.

10. The vehicle (100, 100', 100", 200) of claim 9, wherein one or more of the left rear wheel (230) and the right rear wheel (240) is non-pivoted.

11. The vehicle (100, 100', 100", 200) of claim 9 or 10, wherein one or more of the left rear wheel (230) and the right rear wheel (240) is electrically driven.

12. The vehicle (100, 100', 100", 200) of any of claims 9 to 11, wherein the front wheel (210) is pivotable around a vertical axis of the vehicle by at least 90° from a straight position.

13. A computer-implemented method (300) for manoeuvring a dolly vehicle (200) comprising a pivoted front wheel (210), a left rear wheel (230), and a right rear wheel (240), the computer-implemented method (300) comprising:

    acquiring (302), by processing circuitry (275, 285, 402) of a computer system (270, 280, 400), a desired steering angle ($\delta$) for the pivoted front wheel (210);
    determining (304), by the processing circuitry (275, 285, 402), a steering moment ($M_{st}$) to provide the desired steering angle ($\delta$) at the pivoted front wheel (210); and
    determining (306), by the processing circuitry (275, 285, 402), a drive torque ($T_{el2}$, $T_{el3}$) for one or more of the left rear wheel (230) and the right rear wheel (240) to provide the determined steering moment ($M_{st}$).

14. A computer program product comprising program code for performing, when executed by processing circuitry (275, 285, 402), the computer-implemented method (300) of claim 13.

15. A non-transitory computer-readable storage medium comprising instructions, which when executed by processing circuitry (275, 285, 402), cause the processing circuitry to perform the computer-implemented method (300) of claim 13.

100

110    115    120    130    140

**FIG. 1A**

100'    110'    130    120'

121    122

**FIG. 1B**

100''    120''

130

**FIG. 1C**

**FIG. 2**

EP 4 772 419 A1

300

```
┌─────────────────────────────────────────────┐
│ Acquiring a desired steering angle for the    │
│ pivoted front wheel                           │      302
└─────────────────────────────────────────────┘
                      │
                      ▼
┌─────────────────────────────────────────────┐
│ Determining a steering moment to provide the  │
│ desired steering angle at the pivoted front    │      304
│ wheel                                          │
└─────────────────────────────────────────────┘
                      │
                      ▼
┌─────────────────────────────────────────────┐
│ Determining a drive torque for one or more of  │
│ the left rear wheel and the right rear wheel to │      306
│ provide the determined steering moment         │
└─────────────────────────────────────────────┘
                      │
                      ▼
┌ ─ ─ ─ ─ ─ ─ ─ ─ ─ ─ ─ ─ ─ ─ ─ ─ ─ ─ ─ ─ ─ ┐
│ Adjusting the distance from the kingpin to the │
│ position of the pivoted front wheel            │      308
└ ─ ─ ─ ─ ─ ─ ─ ─ ─ ─ ─ ─ ─ ─ ─ ─ ─ ─ ─ ─ ─ ┘
                      │
                      ▼
┌ ─ ─ ─ ─ ─ ─ ─ ─ ─ ─ ─ ─ ─ ─ ─ ─ ─ ─ ─ ─ ─ ┐
│ Transmit the determined drive torque(s) to a   │
│ controller of the dolly vehicle                │      310
└ ─ ─ ─ ─ ─ ─ ─ ─ ─ ─ ─ ─ ─ ─ ─ ─ ─ ─ ─ ─ ─ ┘
```

**FIG. 3**

```
┌──────────────────────────────────────────────────────────┐
│ 400                                                         │
│          ┌────────────────────────────────────────┐        │
│          │ 404                                      │        │
│          │  ┌──────────┐  ┌─────────────────────┐  │        │
│          │  │ 408      │  │ 410                  │  │        │
│          │  │ ┌──────┐ │  │ ┌──────┐ ┌──────┐   │  │        │
│  ┌─────┐ │  │ │ 412  │ │  │ │ 416  │ │ 418  │   │  │        │
│  │ 402 │ │  │ └──────┘ │  │ └──────┘ └──────┘   │  │        │
│  └─────┘ │  └──────────┘  └─────────────────────┘  │        │
│     ▲    └────────────▲───────────────────────────┘        │
│     ▼                 ▼                                     │
│  ◁═════════════════════════ 406 ═══════════════════════▷   │
│     ▲        ▲          ▲           ▲                       │
│     ▼        ▼          ▼           ▼                       │
│  ┌────────┐ ┌──────┐ ┌──────┐ ┌──────┐                     │
│  │ 414    │ │ 422  │ │ 424  │ │ 426  │                     │
│  │ ┌────┐ │ └──────┘ └──────┘ └──────┘                     │
│  │ │420 │ │                                                 │
│  │ └────┘ │                                                 │
│  └────────┘                                                 │
└──────────────────────────────────────────────────────────┘
```

**FIG. 4**

Europäisches
Patentamt

European
Patent Office

Office européen
des brevets

## EUROPEAN SEARCH REPORT

**Application Number**

**EP 25 15 0392**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/328823 A1 (BERTAIA ANDREA [IT]) 3 October 2024 (2024-10-03) | 1,3-5, 7-15 | INV. B62D11/00 |
| A | * figures 1-3 * * paragraphs [0002], [0009], [0018] – [0026], [0028] – [0030], [0034] – [0035], [0045] – [0046], [0053], [0055], [0058] – [0062] * | 2,6 | B62D11/04 B62D11/24 B62D49/00 B62D53/12 |
| | ----- | | |
| A | CN 112 757 912 A (BEIJING INSTITUTE TECH ZHUHAI) 7 May 2021 (2021-05-07) * figures 1-5 * * page 6 - page 7 * | 1-15 | |
| | ----- | | |
| A | US 2023/312029 A1 (LAYFIELD BRIAN [CA] ET AL) 5 October 2023 (2023-10-05) * figures 1, 10-11 * * paragraph [0144] * | 1-15 | |
| | ----- | | |

**TECHNICAL FIELDS SEARCHED (IPC)**

B62D

The present search report has been drawn up for all claims

| Place of search | Date of completion of the search | Examiner |
|---|---|---|
| The Hague | 24 June 2025 | Socolov, Elena |

EPO FORM 1503 03.82 (P04C01)

## ANNEX TO THE EUROPEAN SEARCH REPORT
## ON EUROPEAN PATENT APPLICATION NO.

EP 25 15 0392

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | | Publication date |
|---|---|---|---|---|
| US 2024328823 A1 | 03-10-2024 | EP | 4374137 A1 | 29-05-2024 |
| | | US | 2024328823 A1 | 03-10-2024 |
| | | WO | 2023002403 A1 | 26-01-2023 |
| CN 112757912 A | 07-05-2021 | NONE | | |
| US 2023312029 A1 | 05-10-2023 | CA | 3173901 A1 | 17-03-2022 |
| | | US | 2023312029 A1 | 05-10-2023 |
| | | WO | 2022051852 A1 | 17-03-2022 |

EPO FORM P0459

For more details about this annex : see Official Journal of the European Patent Office, No. 12/82